# EUROPÄISCHE PATENTSCHRIFT

(11) **EP 1 382 489 B1**
(45) Veröffentlichungstag und Bekanntmachung des Hinweises auf die Patenterteilung: **19.04.2006**
(21) Anmeldenummer: 03015762.2
(22) Anmeldetag: 10.07.2003
(51) Int. Cl.: B60R 5/04, B60R 7/00, B60R 21/06

(54) **Schutzvorrichtung für den Laderaum eines Kraftfahrzeuges**
Protection device for a luggage compartment of a vehicle
Dispositif de protection pour le coffre d'un véhicule

(30) Priorität: 17.07.2002 DE 10232448
(43) Veröffentlichungstag der Anmeldung: 21.01.2004
(73) Patentinhaber: BOS GmbH & Co. KG, 73760 Ostfildern (DE)
(72) Erfinder: Sitzler, Peter, 42111 Wuppertal (DE); Ledüc, Peter, 40468 Düsseldorf (DE)
(74) Vertreter: Ruff, Michael

(56) Entgegenhaltungen:
- EP-A- 0 943 498
- EP-A- 1 153 795
- DE-A- 4 239 470
- DE-A- 19 837 685
- DE-C- 19 708 192
- PATENT ABSTRACTS OF JAPAN vol. 010, no. 246 (M-510), 23. August 1986 (1986-08-23) & JP 61 075034 A (NISSAN MOTOR CO LTD), 17. April 1986 (1986-04-17)

## Beschreibung

Die Erfindung betrifft eine Schutzvorrichtung für einen Laderaum eines Kraftfahrzeuges gemäß dem Oberbegriff des Anspruches 1.

Die gattungsgemäße EP 1 153 795 A1 betrifft eine Laderaumschutzvorrichtung, bei der eine auf einer Wickelwelle gehaltene Werkstoffbahn in einem plattenartigen Teil integriert ist, das als Deckel für eine Vertiefung in einem Laderaumboden vorgesehen ist. Die Halteplatte kann derart eingesetzt werden, dass die als Trennnetz ausgebildete Werkstoffbahn in einem Heckbereich des Fahrzeugs angeordnet und in eine vertikale Rückhalteposition nach oben ausziehbar ist. Dadurch wird verhindert, dass Ladegut beim Öffnen einer Heckklappe aus dem Laderaum nach hinten herausfallen kann.

Aus der DE 198 37 685 A1 ist ein Laderaum für ein Kraftfahrzeug bekannt, bei dem ein Trennnetz zur Segmentierung des Laderaumes aus einem seitlichen Wandungsbereich des Laderaumes ausziehbar und an der gegenüberliegenden Seitenwandung festlegbar ist.

Die JP-A-61075034 betrifft eine Laderaumabdeckvorrichtung, bei der eine Werkstoffbahn über eine Umlenkstange umlenkbar ist, die innerhalb des Fahrzeugs verlagerbar angeordnet ist.

Weitere Schutzvorrichtungen sind in zahllosen Varianten bekannt. Beispielsweise dienen solche Schutzvorrichtungen zur Abtrennung des Laderaums des Kfz von der Fahrgastzelle, aber auch als Sichtschutz, um bei Bedarf einen Einblick in den Laderaum von außen zu verhindern. Schließlich sind auch Schutzvorrichtungen bekannt, die variable Einsatzmöglichkeiten bieten und komfortabel betätigbar sind. In diesem Zusammenhang wird auf die Patentanmeldung DE 102 204 96 der Anmelderin verwiesen, mit der u.a. eine Möglichkeit bereitgestellt wird, in einem Laderaum angeordnetes Ladegut niederzuhalten und verrutschsicher festzulegen.

Der Erfindung liegt die Aufgabe zugrunde, die bekannte Schutzvorrichtung derart weiterzuentwickeln, dass diese unter Gewährleistung eines hohen Bedienungskomforts die Möglichkeit bereitstellt, im Laderaum befindliche Ladegüter im Falle einer starken Befüllung des Laderums vor einem Heraus- fallen aus dem Laderaum zu schützen.

Die Erfindung löst diese Aufgabe mit den Merkmalen des Anspruches 1.

Das Prinzip der Erfindung besteht somit zunächst darin, der Schutzvorrichtung eine Werkstoffbahn zuzuordnen, die in ihrer Ruhelage versteckt angeordnet ist, in den Laderaum somit nicht hineinragt und deshalb das Laderaumvolumen nicht verringert. In ihrer Ruhelage weist die Werkstoffbahn auch keine vorspringenden Bereiche auf, die in irgendeiner Art und Weise störend wirken können. Auch die Schutzvorrichtung, insbesondere auch ein gegebenenfalls vorgesehenes Gehäuse für die Werkstoffbahn, in dem beispielsweise eine Wickelwelle angeordnet ist, auf der die Werkstoffbahn aufrollbar ist, ragt nicht in den Laderaum hinein und bildet auf diese Weise keine störenden Vorsprünge aus. Die Schutzvorrichtung ist somit vorzugsweise ebenfalls bei in Ruheposition befindlicher Werkstoffbahn versteckt angeordnet.

Erfindungsgemäß ist die Werkstoffbahn in eine zweite Gebrauchsposition überführbar, in der sie eine Ladekante der Zugangsöffnung überdeckt. Hierbei besteht die Möglichkeit, die Werkstoffbahn bei Bedarf variabel einzusetzen, und der Werkstoffbahn die Funktion einer Schutzabdeckung für die Ladekante zuzuordnen. In dieser zweiten Gebrauchsposition verhindert die Werkstoffbahn beispielsweise ein Verkratzen der Ladekante, also des unteren Bereiches der Zugangsöffnung. Andererseits kann, je nach Ausgestaltung der Ladekante damit auch verhindert werden, dass Ladegüter verkratzt werden, die beim Einbringen in den Laderaum oder bei der Entnahme aus dem Laderaum über die Ladekante geschoben werden. Schließlich bietet diese Ausgestaltung auch die Möglichkeit, den heckseitigen Stoßfänger des Kraftfahrzeugs, welcher sich üblicherweise heckseitig der Ladekante unmittelbar anschließt, mit abzudecken. Hierdurch kann auf vorteilhafte Weise verhindert werden, dass der üblicherweise lackierte Stoßfänger durch Ladegüter beim Einbringen oder bei der Entnahme verkratzt wird.

Bei in Ruhelage befindlicher Werkstoffbahn ragt diese bzw. ragen auch keinerlei Werkstoffbereiche der Schutzvorrichtung in die Zugangsöffnung hinein, so dass die Zugangsöffnung dem Benutzer vollständig zur Verfügung steht. Ein komfortables Einbringen von Gegenständen in den Laderaum hinein sowie eine entsprechend komfortable Entnahme von Ladegut aus dem Laderaum heraus ist somit möglich, ohne dass auf Grund des Vorhandenseins der Schutzvorrichtung irgendwelche Behinderungen auftreten. Die Zugangsöffnung ist somit bei in Ruhelage befindlicher Werkstoffbahn nicht verkleinert.

In diesem Zusammenhang ist auch von Bedeutung, dass auch die Schutzvorrichtung nicht in die Zugangsöffnung hineinragt, so dass auch die Schutzvorrichtung insgesamt, also insbesondere auch ein Gehäuse für die in Ruhelage befindliche Werkstoffbahn, bei in Ruhelage befindlicher Werkstoffbahn die Zugangsöffnung nicht, auch nicht teilweise, versperrt.

Die Werkstoffbahn ist auf einfache Weise, insbesondere manuell, aus ihrer Ruhelage in eine Gebrauchslage überführbar, in der sie die Zugangsöffnung wenigstens teilweise verschließt. Die Formulierung, wonach die Zugangsöffnung zumindest teilweise verschlossen ist, bedeutet im Sinne der Erfindung, daß ein wesentlicher Teil der Zugangsöffnung, also ein großflächiger Bereich der Zugangsöffnung zwischen der unteren Ladekante der Zugangsöffnung und dem oberen Rand der Zugangsöffnung, beispielsweise etwa die Hälfte der Fläche der insgesamt zur Verfügung stehenden Zugangsöffnung, von der Werkstoffbahn verschlossen wird. Insbesondere wird derjenige Abschnitt der Zugangsöffnung verschlossen, welcher sich zwischen der unteren Ladekante und einer Höhe befindet, die im wesentlichen der Höhe einer in Arbeitsposition befindlichen Laderaumabdeckung (bei Betrachtung der Projektion der Laderaumabdeckung auf die Zugangsöffnung) entspricht. Auf diese Weise kann bei starker Befüllung des Laderaums, wie es beispielsweise bei Urlaubsfahrten oder bei besonderen Transportpositionen der Fall ist, verhindert werden, daß beim Öffnen der Hecktür Ladegüter aus dem Laderaum herausfallen.

In diesem Zusammenhang ist es von besonderer Wichtigkeit, daß die Werkstoffbahn aus ihrer Ruhelage heraus in ihre Gebrauchslage vorteilhafterweise erst dann überführt wird, wenn der Laderaum mit Ladegütern befüllt ist. Die in ihrer Gebrauchslage befindliche Werkstoffbahn bietet auf diese Weise eine Sicherung gegen Verrutschen von Ladegütern zum Fahrzeugheck hin, wenn entsprechende Beschleunigungen, beispielsweise beim Anfahren des Kraftfahrzeugs, auftreten.

Auch können beim Befüllen des Laderaums mit kompressiblen Ladegütern von der in Gebrauchslage befindlichen Werkstoffbahn Kompressionskräfte ausgeübt werden, so daß bereits vor dem Schließen der Hecktür eine Art Rückhaltesicherung für eine komprimierte Anordnung von Ladegütern bereitgestellt wird.

Die Anordnung der Werkstoffbahn in Gebrauchslage derart, daß die Zugangsöffnung zumindest teilweise verschlossen wird, bietet dabei die Möglichkeit, daß das zur Verfügung stehende Laderaumvolumen vollständig ausnutzbar ist.

Die in Gebrauchslage befindliche Werkstoffbahn ist unmittelbar neben bzw. dicht benachbart der Hecktür angeordnet, wenn sich die Hecktür in Schließstellung befindet. Hierdurch wird das Laderaumvolumen praktisch überhaupt nicht verkleinert.

Der Begriff Werkstoffbahn im Sinne der Erfindung umfasst zunächst jede Art von Material, die für eine Rückhaltesicherung von Ladegütern geeignet ist. Hierunter fallen beispielsweise netzartige, also maschenaufweisende Strukturen, wie sie im Bereich von Trennnetzen üblich sind. Es kann aber vorzugsweise auch daran gedacht werden, vollflächige folienähnliche Materialien zu verwenden.

In diesem Zusammenhang ist gemäß einer vorteilhaften Ausführung der Erfindung vorgesehen, die Werkstoffbahn flexibel auszubilden. Dies ermöglicht insbesondere die Rollbarkeit der Werkstoffbahn, so dass eine besonders platzsparende Unterbringung der in Gebrauchslage befindlichen Werkstoffbahn möglich wird. Es kann jedoch auch vorgesehen sein, die Werkstoffbahn verhältnismäßig starr auszubilden, und beispielsweise einen Einbauraum für die in Ruhelage befindliche Werkstoffbahn unterhalb eines Bodens des Laderaums vorzusehen. Bei diesem Ausführungsbeispiel kann die Werkstoffbahn zunächst entgegen der Fahrtrichtung des Kfz ausgezogen werden, und anschließend, durch einen einfachen Verschwenkvorgang um eine beispielsweise unterhalb der Ladekante der Zugangsöffnung angeordnete Schwenkachse nach oben verschwenkt werden.

Entscheidend bei der erfindungsgemäßen Schutzvorrichtung ist darüber hinaus auch, dass die in Gebrauchslage befindliche Werkstoffbahn unmittelbar benachbart der Zugangsöffnung angeordnet ist, bzw. sogar in der Zugangsöffnung angeordnet sein kann.

Die erfindungsgemäße Schutzvorrichtung bietet darüber hinaus die Möglichkeit einer variablen Einsetzbarkeit. So ist vorzugsweise vorgesehen, der Schutzvorrichtung wenigstens eine weitere Gebrauchslage zuzuordnen.

Aus der DE 44 26 882 C1 ist ein Ladegutsicherungssystem für den Laderaum eines Kraftfahrzeugs bekannt, welches ein Spannband umfaßt, das mittels im Laderaum verteilt angeordneter Umlenkbeschläge umlenkbar ist. Dieses dient einer exakten Positionierung des Ladeguts. Das Spannband weist eine Ruhelage auf, in der ein Bandaufroller in den Laderaum hineinragt. Auch die Vielzahl der Umlenkrollen springt in den Laderaum hinein vor und verkleinert insoweit das zur Verfügung stehende Laderaumvolumen. Schließlich ist das Spannband offensichtlich sehr schmal ausgebildet und verschließt die Zugangsöffnung bei geöffneter Hecktür nicht. Im Laderaum angeordnetes Ladegut wird bei hoher Befüllung des Laderaums, insbesondere bei einer Vielzahl kleiner und übereinander gestapelter Ladegüter, nicht an einem Durchtritt durch die Zugangsöffnung gehindert.

Aus der US-A 5 207 260 ist ein Rückhaltesystem für Ladegüter bekannt, bei dem eine Werkstoffbahn zwischen einer Mehrzahl von im Laderaum angeordneten Pfosten festlegbar ist. Die Pfosten führen zu einer deutlichen Verringerung des zur Verfügung stehenden Laderaumvolumens. Dieser Druckschrift ist nicht entnehmbar, daß die Werkstoffbahn in ihrer Gebrauchslage die Zugangsöffnung zumindest teilweise verschließt.

Aus der Fig. 11 der DE 100 47 542 A1 ist ein nicht gattungsgemäßes Segmentierteil bekannt, welches im wesentlichen vertikal ausgerichtet ist und entlang der Fahrzeuglängsrichtung in Profilschienen führbar angeordnet ist. In einem Gehäuse dieses Segmentierteils ist ein nach unten ausziehbares Flächengebilde positioniert. Das Segmentierungsteil weist keine Ruhelage auf, in der es versteckt oder komprimiert angeordnet ist und die Zugangsöffnung im wesentlichen vollständig freigibt. Für den Fall, daß das Flächengebilde nicht nach unten ausgezogen ist, versperrt das Gehäuse für das Flächengebilde in Fahrzeugquerrichtung die Zugangsöffnung und verhindert auf diese Weise eine Befüllung des Laderaums mit Ladegütern. Außerdem ist nicht vorgesehen, das Segmentierungsteil bis an die Zugangsöffnung heranzubringen. Schließlich besitzt das Segmentierungsteil eine Segmentierungsfunktion, mit der ein Laderaum unterteilt werden soll. Ein Verschließen der Zugangsöffnung mit dem beschriebenen Segmentierteil ist nicht beabsichtigt und nicht möglich.

Gemäß einer vorteilhaften Ausgestaltung der Erfindung ist der Werkstoffbahn wenigstens ein Betätigungselement zur Überführung der Werkstoffbahn aus der Ruhelage in die Gebrauchslage zugeordnet. Diese Ausgestaltung bietet den Vorteil, daß das Betätigungselement, beispielsweise eine Handschlaufe, ein Griffelement oder gegebenenfalls auch ein am freien Ende der Werkstoffbahn angeordnetes Endelement, wie ein Auszugsstab, unmittelbar manuell greifbar ist. So kann beispielsweise eine als Rollo ausgebildete Werkstoffbahn in ihre Gebrauchslage ausgezogen werden.

Gemäß einer weiteren vorteilhaften Ausgestaltung der Erfindung ist das Betätigungselement bei in Ruhestellung befindlicher Werkstoffbahn im Bereich des Randes der Zugangsöffnung angeordnet. Diese Ausgestaltung bietet den Vorteil, daß die Schutzvorrichtung insgesamt versteckt angeordnet sein kann. So ist vorzugsweise vorgesehen, daß der Schutzvorrichtung ein karosserieseitig angeordneter Einbauraum zugeordnet ist, aus dem beispielsweise das Betätigungselement geringfügig herausragt. So kann ein Benutzer manuell dieses Betätigungselement auf einfache Weise ergreifen und die Werkstoffbahn in ihre Gebrauchslage, gegebenenfalls auch in eine weitere Gebrauchslage überführen, ohne dass die in Ruhelage befindliche Werkstoffbahn in den Laderaum hineinragt.

Gemäß einer weiteren vorteilhaften Ausgestaltung der Erfindung ist die in Ruhelage befindliche Werkstoffbahn in einem fahrzeugseitigen Einbauraum aufgenommen. Diese Ausgestaltung bietet in besonders vorteilhafter Weise die Möglichkeit einer versteckten Anordnung der Werkstoffbahn. Insbesondere kann vorgesehen sein, den Einbauraum für die Schutzvorrichtung insgesamt zu verwenden.

Der Einbauraum für die in Ruhelage befindliche Werkstoffbahn und/oder für die gesamte Schutzvorrichtung ist vorteilhafterweise einem Rand der Zugangsöffnung benachbart angeordnet. Beispielsweise kann vorgesehen sein, den Einbaum laderaumseitig vorzusehen, unterhalb eines Laderaumbodens. Diese Anordnung bietet die Möglichkeit, einen Austrittsschlitz des Einbauraums für die Werkstoffbahn unmittelbar benachbart der Ladekante der Zugangsöffnung vorzusehen.

Gemäß einer weiteren Ausgestaltung der Erfindung ist der Einbauraum für die in Ruhelage befindliche Werkstoffbahn außerhalb des Laderaums angeordnet, beispielsweise unterhalb der Ladekante der Zugangsöffnung. In diesem Falle kann eine beispielsweise biegesteif ausgebildete plattenartige Werkstoffbahn aus dem unterhalb des Laderaumbodens befindlichen Einbauraum zunächst entgegen der Fahrtrichtung des Kfz ausgezogen werden und anschließend in eine vertikale Gebrauchslage verschwenkt werden, in der die Werkstoffbahn die Zugangsöffnung teilweise verschließt.

Gemäß einer weiteren vorteilhaften Ausgestaltung der Erfindung ist der Einbauraum hinter einer Begrenzungsfläche des Laderaums angeordnet. Diese Ausführungsform ermöglicht eine besonders einfache Möglichkeit einer versteckten Anordnung der Werkstoffbahn. Insbesondere wird auf diese Weise eine Ausgestaltung der Schutzvorrichtung derart möglich, daß das Laderaumvolumen praktisch überhaupt nicht verkleinert ist.

Gleichermaßen ist insbesondere vorgesehen, dass der Einbauraum nicht nur die in Ruhelage befindliche Werkstoffbahn, sondern die Schutzvorrichtung insgesamt aufnimmt.

Gemäß einer weiteren vorteilhaften Ausgestaltung der Erfindung ist die Werkstoffbahn in eine dritte und/oder vierte Gebrauchsposition überführbar, in der ihr freies Ende innerhalb des Laderaums, distanziert von der Zugangsöffnung, angeordnet ist. Diese Ausgestaltung bietet beispielsweise die Möglichkeit, der Werkstoffbahn zusätzlich die Funktion zuzuordnen, Ladegut auf dem Laderaumboden niederzuhalten und festzuzurren. Alternativ kann durch das Vorsehen einer derartigen dritten bzw. vierten Gebrauchsposition auch die Möglichkeit bereitgestellt werden, die Werkstoffbahn auf den Boden des Laderaumes flächig aufzulegen, so dass insbesondere bei einer als Folie oder Folienbahn ausgebildeten Werkstoffbahn ein Schutz des Laderaumbodens bereitgestellt wird. So kann auf einfache Weise ein als Teppich ausgebildeter Laderaumboden vor Verschmutzung oder Durchnässung bei dreckigen oder nassen Ladegütern geschützt werden. In diesem Zusammenhang ist vorstellbar, dass die Werkstoffbahn abwaschbar bzw. wasserundurchlässig ausgebildet ist.

Gemäß einer weiteren vorteilhaften Ausgestaltung der Erfindung sind die Konturen der Werkstoffbahn an die Konturen der Zugangsöffnung angepasst. Diese Ausgestaltung bietet insbesondere die Möglichkeit, bei Zugangsöffnungen, welche keine parallelen Seitenränder aufweisen, sondern beispielsweise konisch nach oben zulaufen, die Zugangsöffnung praktisch vollständig, zumindest von der unteren Laderaumkante bis etwa zu einer der Höhe der Laderaumabdeckung entsprechenden Höhe, zu verschließen.

Weitere Vorteile ergeben sich aus den nicht zitierten Unteransprüchen sowie an Hand der nun folgenden Beschreibung der in den Figuren dargestellten Ausführungsbeispiele.

In den Figuren zeigen:
- Fig. 1: schematisch in perspektivischer Ansicht in abgebrochener Darstellung den Laderaum eines Kombinations-Personenkraftwagens mit einer in Arbeitsposition befindlichen Laderaumabdeckung und einer in Gebrauchslage befindlichen Werkstoffbahn einer erfindungsgemäßen Schutzvorrichtung.
- Fig. 2: in einer Darstellung gemäß Fig. 1 den Laderaum mit einer in Ruheposition befindlichen Laderaumabdeckung und eine in einer zweiten Gebrauchslage befindlichen Werkstoffbahn der erfindungsgemäßen Schutzvorrichtung.

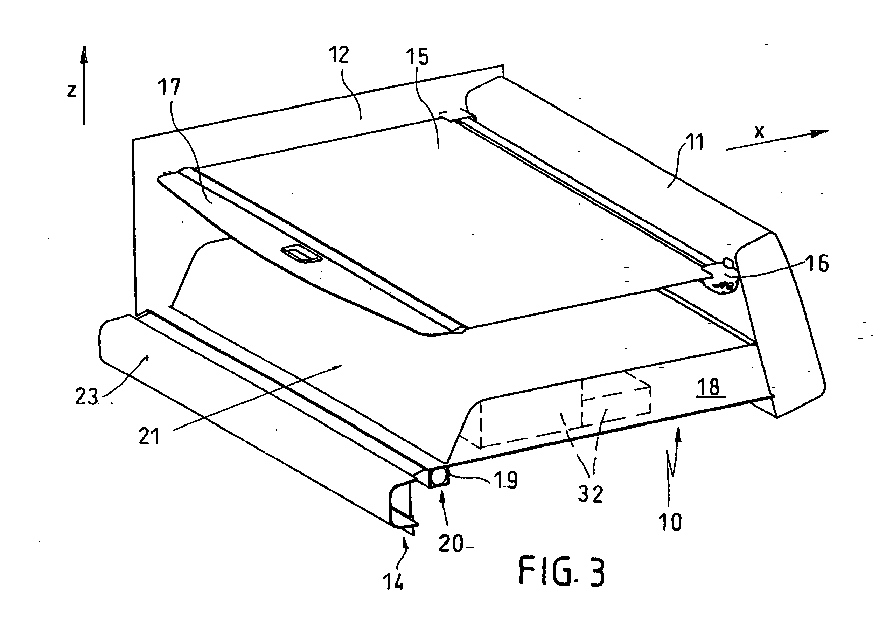

- Fig. 3: die in Arbeitsposition befindliche Laderaumabdeckung und die in einer dritten Gebrauchslage befindliche Werkstoffbahn der erfindungsgemäßen Schutzvorrichtung.

- Fig. 4: schematisch dargestellt in Ansicht den Laderaum gemäß Fig. 1, etwa entlang Ansichtspfeil IV in Fig. 1, mit den vier unterschiedlichen Gebrauchslagen der Werkstoffbahn der erfindungsgemäßen Schutzvorrichtung,
- Fig. 5: eine Ausschnittsdarstellung aus Fig. 4 gemäß Ausschnittskreis V, und
- Fig. 6: den Laderaum gemäß Fig. 1 bei geöffneter Hecktür mit in Gebrauchslage befindlicher Werkstoffbahn der erfindungsgemäßen Schutzeinrichtung etwa gemäß Ansichtspfeil VI, in Fig. 1.

Die in ihrer Gesamtheit in den Figuren mit 20 bezeichnete erfindungsgemäße Schutzvorrichtung wird wie folgt erläutert:

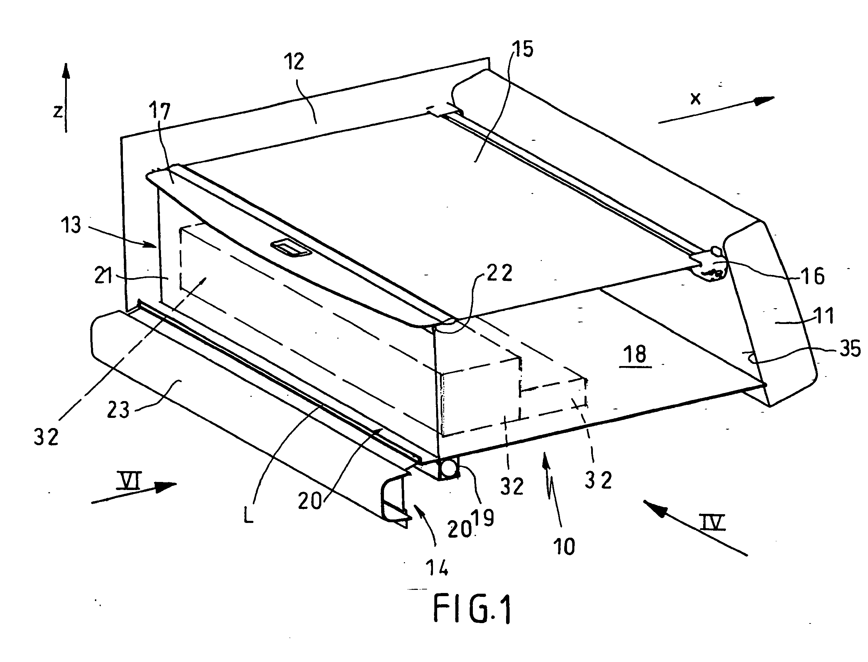

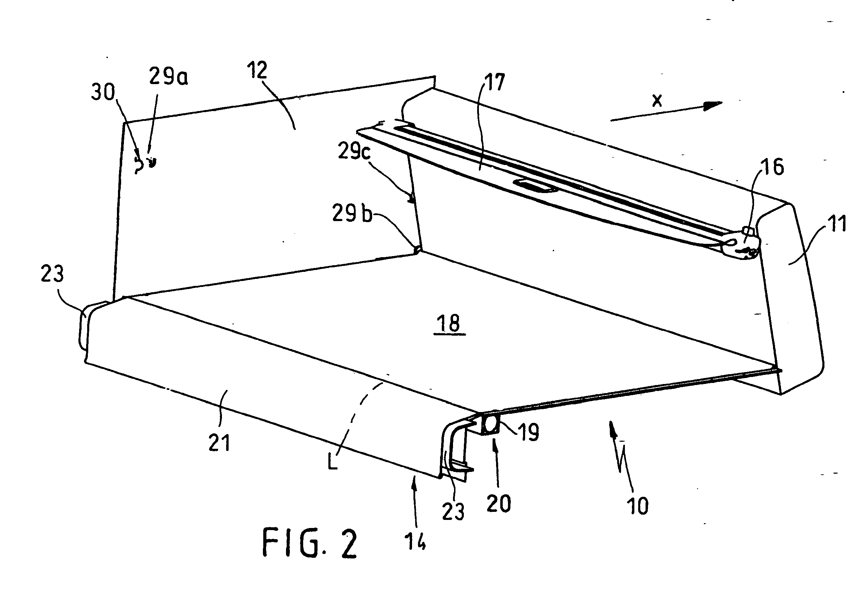

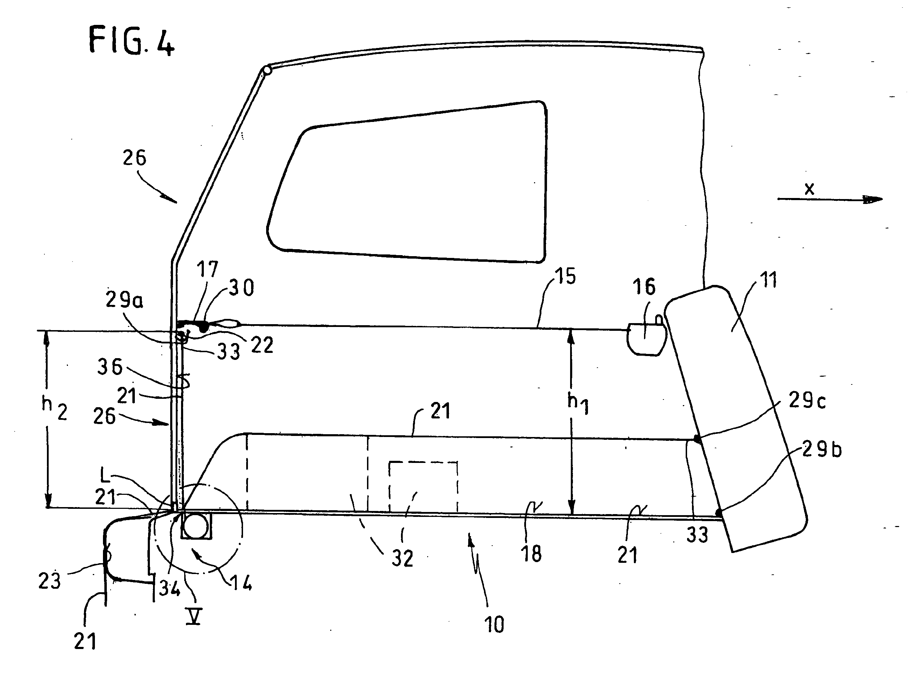

Fig. 1 zeigt in perspektivischer Ansicht den Laderaum 10 eines Kombinations-Personenkraftfahrzeugs. Der Laderaum 10 ist von einer Vielzahl von Begrenzungsflächen umgeben: Hierzu zählen die Rückseite 35 einer Kfz-Fondlehne 11, die Kfz-Seitenwände 12, von denen nur die in Fahrtrichtung x des Kfz linke Seitenwand 12 dargestellt ist, eine Bodenfläche 18 des Laderaums und - bei geschlossener Hecktür 26 (Fig. 4) des Kfz auch die Innenseite 36 der Hecktür 26. In Richtung Z, also bezüglich des Kraftfahrzeugs nach oben wird der Laderaum gemäß Fig. 1 von einer Laderaumabdeckung 15 begrenzt. Falls sich diese, gemäß Fig. 2, in Ruhestellung befindet, wird der Laderaum 10 in Richtung Z von dem nicht dargestellten Dachbereich (Himmel) des Kfz begrenzt.

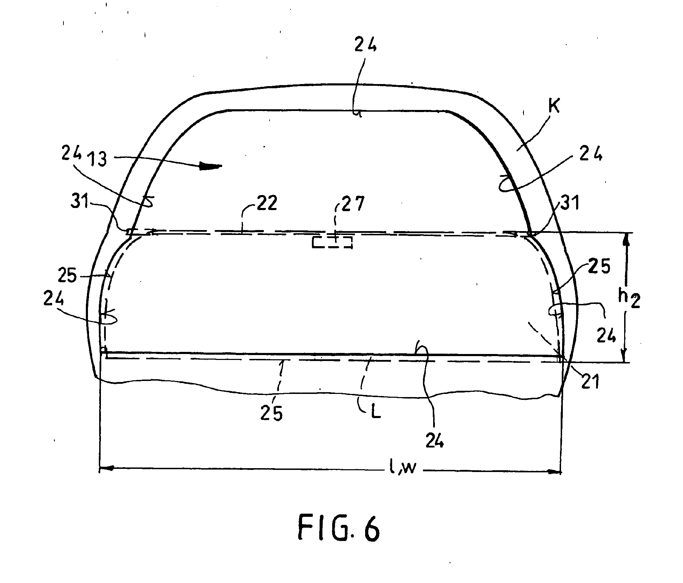

Der heckseitige Zugang zu dem Laderaum 10 wird bei geöffneter Hecktür 26 durch eine Zugangsöffnung 13 gewährleistet. Die Zugangsöffnung 13 weist einen Querschnitt auf, der individuell von der jeweiligen Fahrzeugform, insbesondere auch von der Form der Karosserie K, abhängt. Üblicherweise wird die Zugangsöffnung 13 relativ groß gewählt, um einen leichten Zugang zu dem Laderaum 10 zu erhalten, damit eine komfortable Einbringung und Entnahme von Ladegütern 32 aus dem Laderaum 10 möglich ist. Die Zugangsöffnung 13 weist dabei eine Kontur 24 gemäß Fig. 6 auf, die von einer Vielzahl gerader und gekrümmter Abschnitte gebildet sein kann. Eine Ladekante L bildet den unteren Abschluss der Zugangsöffnung 13.

Entgegen der Fahrtrichtung x des Kfz schließt sich an die Ladekante L typischerweise unmittelbar ein Stoßfänger 23 an, der den Heckbereich 14 des Kfz ausbildet.

Ein Gehäuse 16 für die Laderaumabdeckung 15 ist beispielsweise an der Kfz-Fondlehne 11 befestigt., Es kann auch vorgesehen sein, ein Richtung Z ausziehbares, nicht dargestelltes Trennnetz anzuordnen, welches die zwischen oberem Rand der Kfz-Fondlehne 11 und dem Dachhimmel verbleibende Öffnung verschließt. In diesem Falle kann der Laderaum 10 eine Höhe aufweisen, die dem Abstand zwischen dem Boden 18 des Laderaumes und dem Kfz-Himmel entspricht, wobei dieser Laderaum vollständig von Grenzflächen umgeben ist.

Die Laderaumabdeckung 15 weist ein Endelement 17 auf, welches in kfzseitigen Halteelementen 30 (Fig. 2) befestigbar ist. Es kann beispielsweise ein gemäß Fig. 1 vorgesehenes Endbord 17 oder alternativ eine Auszugsstange vorgesehen sein.

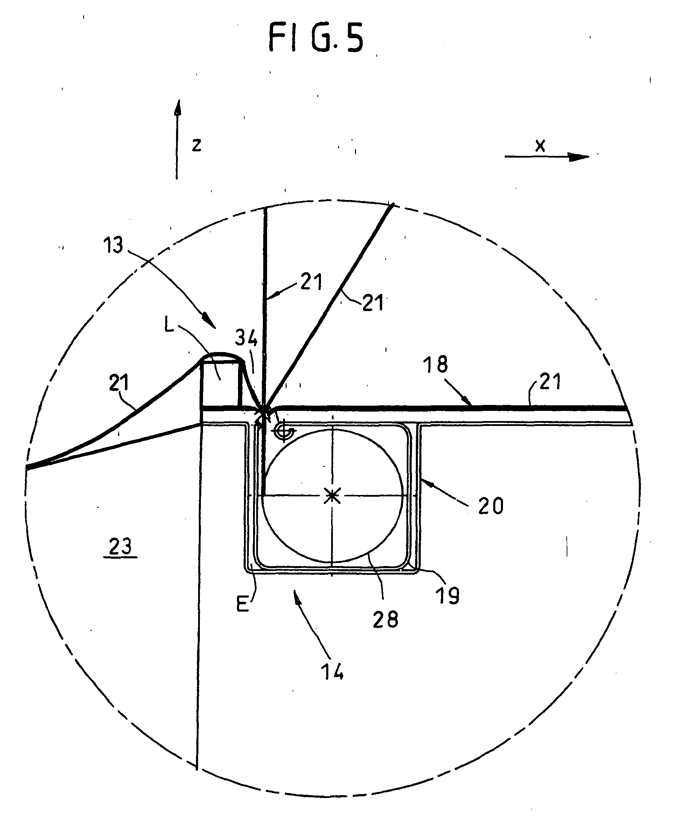

Gemäß Fig. 1 ist eine Schutzvorrichtung 20 vorgesehen, der ein Kassettengehäuse zugeordnet ist. Das Kassettengehäuse ist im Querschnitt in Fig. 5 vergrößert dargestellt. Fig. 5 zeigt, dass unterhalb der Bodenfläche 18 des Laderaumes 10 ein Einbauraum E vorgesehen ist, in dem die Kassette 19 angeordnet ist. Die Form des Einbauraumes E ist auf die äußere Form der Kassette 19 vorteilhafterweise abgestimmt. Insbesondere kann vorgesehen sein, die Kassette 19 lösbar innerhalb des Einbauraumes E festzulegen.

Die Schutzvorrichtung 20 gemäß dem Ausführungsbeispiel sieht innerhalb der Kassette 19 eine nur schematisch angedeutete Wickelwelle 28 vor, die durch einen nicht dargestellten Federmotor in Aufwickelrichtung belastet ist. Entgegen der Kraft des Federmotors kann eine auf der Wickelwelle 28 auf gerollte Werkstoffbahn 21, die beispielsweise vollflächig, insbesondere nach Art einer Folie ausgebildet ist, oder alternativ eine Netz-Maschenstruktur aufweist, in Richtung Z ausgezogen werden.

Am freien Ende 33 der Werkstoffbahn 21 (Fig. 4) befindet sich ein insbesondere formstabiles Endelement, beispielsweise ein Auszugsstab 22. Die axialen Endbereiche des Auszugsstabes 22 sind als Befestigungselemente 31 (Fig. 6) ausgebildet, und greifen nach Art von Zapfen in Haltelemente 29a in der Seitenwand 12 des Kfz ein. Fig. 1 zeigt die in Gebrauchslage befindliche Werkstoffbahn 21, in der diese den Laderaum 10 gemeinsam mit der Laderaumabdeckung 15 auch bei geöffneter Hecktür 26 vollständig abschließt.

Bei in Gebrauchslage befindlicher Werkstoffbahn 21 ist die Zugangsöffnung 13 bis zu der Höhe h₂ (Fig. 6), also zwischen der Laderaumkante L und etwa der Projektion der Laderaumabdeckung 15 vollständig verschlossen. Dies wird einerseits dadurch erreicht, dass gemäß Fig. 4 die Schutzvorrichtung 20 unmittelbar benachbart der Ladekante L angeordnet ist. Hierzu ist vorteilhaft vorgesehen, einen Austrittsschlitz 34 für die Werkstoffbahn 21 der Ladekante L unmittelbar benachbart anzuordnen. Andererseits ist auch die Kontur 25 der Werkstoffbahn 21 an die Kontur 24 der Zugangsöffnung 13 angepasst. Zwischenräume können auf diese Weise praktisch vollständig vermieden werden. Für den Fall, dass die Werkstoffbahn 21 Bestandteil einer Schutzvorrichtung 20 ist, die auch bei in Ruhelage befindlicher Werkstoffbahn 21 innerhalb des Laderaumes 10 angeordnet ist, kann dabei auf einfache Weise auch erreicht werden, dass sich die in Gebrauchslage befindliche Werkstoffbahn 21 und die Zugangsöffnung 13 überlappen, derart, dass die von der Werkstoffbahn 21 bereitgestellte Rückhaltefläche größer ist als der abzudeckende Flächenabschnitt der Zugangsöffnung 13.

Die Länge I der Werkstoffbahn (Fig. 6) entspricht dabei im wesentlichen der lichten Weite w der Zugangsöffnung 13.

Ein angedeutetes Betätigungselement 27 (Fig. 6), beispielsweise nach Art eines Griffelementes, ist vorzugsweise im Bereich des freien Endes 33 der Werkstoffbahn 21 angeordnet und dient einem einfachen Erfassen und komfortablen Ausziehen der Werkstoffbahn 21 aus ihrer nicht dargestellten Ruhelage in ihre Gebrauchslage.

Bei in Ruhelage befindlicher Werkstoffbahn 21 ist diese vollständig auf die Wickelwelle 28 aufgewickelt, wobei der Auszugsstab 22 auf nicht dargestellte Weise im Bereich des Austrittsschlitzes 34 der Schutzvorrichtung 20, liegt. Vorteilhafterweise ist im Bereich des Austrittsschlitzes 34 eine Aufnahme für den Auszugsstab 22 sowie für das Betätigungselement 27 vorgesehen, die bei aufgenommenem Auszugsstab und aufgenommenem Betätigungselement dafür sorgt, dass die Bodenfläche 18 des Laderaums bündig mit der in Ruheposition befindlichen Schutzvorrichtung abschließt.

Bei in Ruheposition befindlicher Werkstoffbahn 21 tritt dem Benutzer bei geöffneter Hecktür 26 die Zusatzöffnung 13 gemäß Fig. 6 in ihrer vollständigen Größe entgegen, ohne dass irgendein störender Vorsprung in die Zugangsöffnung 13 hineinragt und ein Einbringen von Ladegütern in den Laderaum 10 hinein oder eine Entnahme dieser Ladegüter aus dem Laderaum heraus auf irgendeine Weise behindern oder erschweren würde.

Die in Ruheposition befindliche Werkstoffbahn 21 und die somit gleichermaßen in Ruheposition befindliche Schutzvorrichtung 20 sind derart versteckt im Fahrzeug angeordnet, dass keinerlei in den Laderaum 10 hineinragenden Vorsprünge vorgesehen sind. Das Laderaumvolumen wird auf diese Weise nicht verkleinert.

Als versteckte Anordnung im Sinne der Erfindung wird z.B. jede Anordnung einer Werkstoffbahn angesehen, bei der die Werkstoffbahn hinter einer den Laderaum 10 begrenzenden Begrenzungsfläche liegt. Insbesondere bedeutet diese Formulierung, dass die gesamte Schutzvorrichtung 20 hinter einer derartigen Begrenzungsfläche liegt.

Gemäß Fig. 2 ist der Werkstoffbahn 21 eine zweite Gebrauchslage zugeordnet, in der diese die Ladekante L sowie einen Stoßfänger 23 überdeckt. Auf diese Weise ist einerseits ein Schutz der Ladekante L und des Stoßfängers 23 vor Verkratzen erreicht, für den Fall, dass sperrige Gegenstände geladen, oder entladen werden. Andererseits wird auf diese Weise auch bei besonders hochwertigen Ladegütern ein Schutz vor Verkratzen oder einer sonstigen Beschädigung des Ladegutes durch die Ladekante L erreicht.

In die Gebrauchslage gemäß Fig. 2 kann die Werkstoffbahn 21 aus ihrer Ruhelage hinaus, oder gegebenenfalls auch aus ihrer Gebrauchslage gemäß Fig. 1 heraus, ohne weiteres überführt werden. Ein nicht dargestelltes Schaltelement ist vorzugsweise im Bereich des Randes 24 der Zugangsöffnung 13 angeordnet und sorgt vor oder bei dem Überführen der Werkstoffbahn 21 in die zweite Gebrauchslage gemäß Fig. 2 dafür, dass die hohe Zugskraft des Federmotors ausgeschaltet ist. Auf diese Weise kann die Werkstoffbahn 21 in ihrer Gebrauchslage gemäß Fig. 2 schlaff und vorspannungsfrei verbleiben.

Vorteilhafterweise sind der Werkstoffbahn 21 nicht dargestellte Verstärkungszonen, beispielsweise Verstärkungsrippen, zugeordnet, die durch eine stärkere Materialdicke erreicht werden, um einen besonders sicheren Schutz zu gewährleisten. Die Verstärkungszonen können symmetrisch angeordnet sein, und beispielsweise auch nach Art von Rippen in Fahrzeugquer- oder - längsrichtung verlaufen.

Fig. 4 zeigt eine dritte Gebrauchslage der Werkstoffbahn 21, bei der diese mit ihrem freien Ende 33 an Halteelementen 29b befestigt ist, welche in einem Eckbereich zwischen Laderaumboden 18 und Fondlehne 11 angeordnet sind. Die in diesem Fall insbesondere als schmutzabweisende, insbesondere auch wasserundurchlässige Folie ausgebildete Werkstoffbahn 21 kann bei diesem Anwendungsfall den beispielsweise von einem hochwertigen Teppich bereitgestellten Laderaumboden 18 vor Verschmutzung schützen, falls stark verschmutztes oder besonders nasses Ladegut in den Laderaum 10 eingebracht wird. Die in dritter, Gebrauchslage befindliche Werkstoffbahn liegt weitestgehend flach auf dem Boden 18 des Laderaumes 10 auf.

Ein weiteres Paar von Haltelementen 29c ist im Bereich der dem Laderaum 10 zugewandten Seite 35 der Fondlehne 11 vorgesehen und dient ebenfalls zur Aufnahme von ,Befestigungselementen 31 des Auszugsstabs 22. Hiermit können beispielsweise Ladegüter 32 festgezurrt, und auf diese Weise verrutschsicher festgelegt werden.

Bei dem Ausführungsbeispiel kann die Werkstoffbahn 21 in Vertikalrichtung Z bis zu einer Höhe h₂ ausgezogen werden, die dem Abstand h₁ zwischen dem Laderaumboden 18 und der Laderaumabdeckung 15 entspricht. Es ist grundsätzlich jedoch auch vorstellbar, dass die Werkstoffbahn 21 bis zu einer Auszugslänge ausziehbar ist, die dem Abstand zwischen dem Boden 18 und dem Kraftfahrzeughimmel entspricht, und auf diese Weise die Zugangsöffnung 13 vollständig verschließt.

## Patentansprüche

1. Schutzvorrichtung (20) für einen Laderaum (10) eines Kraftfahrzeuges, insbesondere eines Kombinations-Personenkraftfahrzeuges, dem eine heckseitige, von einer Hecktür (26) verschließbare Zugangsöffnung (13) zugeordnet ist, wobei die Schutzvorrichtung (20) eine insbesondere flexible Werkstoffbahn (21) umfasst, die zwischen einer Ruhelage, in der sie versteckt, insbesondere komprimiert, angeordnet ist und die Zugangsöffnung (13) im wesentlichen vollständig freigibt, und einer Gebrauchslage, in der sie die Zugangsöffnung (13) bei geöffneter Hecktür (26) zumindest teilweise verschließt und im Laderaum (10) angeordnetes Ladegut (32) an einem Durchtritt durch die Zugangsöffnung (13) hindert, verlagerbar ist,
**dadurch gekennzeichnet,dass**
die Werkstoffbahn (21) in eine zweite Gebrauchsposition überführbar ist, in der sie eine Ladekante (L) der Zugangsöffnung (13) überdeckt, und dass die Werkstoffbahn (21) in der zweiten Gebrauchsposition einen heckseitigen Stoßfänger (23) des Kraftfahrzeuges überdeckt.

2. Schutzvorrichtung nach Anspruch 1, **dadurch gekennzeichnet, dass** der Werkstoffbahn (21) wenigstens ein Betätigungselement (27) zur Überführung der Werkstoffbahn (21) aus der Ruhelage in die Gebrauchslage zugeordnet ist.

3. Schutzvorrichtung nach Anspruch 2, **dadurch gekennzeichnet, dass** das Betätigungselement (27) bei in Ruhestellung befindlicher Werkstoffbahn (21) im Bereich des Randes (24) der Zugangsöffnung (13) angeordnet ist.

4. Schutzvorrichtung nach einem der Ansprüche 1 bis 3, **dadurch gekennzeichnet, dass** die in Ruhelage befindliche Werkstoffbahn in einem fahrzeugseitigen Einbauraum (E) aufgenommen ist.

5. Schutzvorrichtung nach Anspruch 4, **dadurch gekennzeichnet, dass** der Einbauraum (E) hinter einer Begrenzungsfläche (35, 18, 12) des Laderaums (10), insbesondere unter einer Bodenfläche (18) des Laderaums, angeordnet ist.

6. Schutzvorrichtung nach Anspruch 5, **dadurch gekennzeichnet, dass** der Einbauraum (E) im wesentlichen bündig mit einer Begrenzungsfläche (35, 18, 12) des Laderaums (10), insbesondere mit dem Boden des Laderaums, abschließt.

7. Schutzvorrichtung nach einem der vorangegangenen Ansprüche, **dadurch gekennzeichnet, dass** die Werkstoffbahn (21) flexibel ausgebildet und auf einer Wickelwelle (28) gehalten ist.

8. Schutzvorrichtung nach Anspruch 7, **dadurch gekennzeichnet, dass** der Wickelwelle ein Motor, insbesondere ein Federmotor, zugeordnet ist.

9. Schutzvorrichtung nach Anspruch 8, **dadurch gekennzeichnet, dass** eine von dem Motor auf die Werkstoffbahn ausgeübte Rückzugskraft insbesondere mittels eines Schaltelementes, abschaltbar und/oder zuschaltbar ist.

10. Schutzvorrichtung nach Anspruch 9, **dadurch gekennzeichnet, dass** das Schaltelement im Bereich des Randes (24) der Zugangsöffnung (13) angeordnet ist.

11. Schutzvorrichtung nach einem der vorangegangenen Ansprüche, **dadurch gekennzeichnet, dass** die Werkstoffbahn (21) an ihrem freien Ende (33) Befestigungselemente (31), vorzugsweise an axialen Endbereichen eines Auszugsstabes (22), aufweist, die mit karosserieseitigen Halteelementen (29a, 29b, 29c) zusammenwirken.

12. Schutzvorrichtung nach einem der vorangegangenen Ansprüche, **dadurch gekennzeichnet, dass** die Werkstoffbahn in eine dritte und/oder eine vierte Gebrauchsposition überführbar ist, in der ihr freies Ende (33) innerhalb des Laderaumes, distanziert von der Zugangsöffnung, angeordnet ist.

13. Schutzvorrichtung nach Anspruch 12, **dadurch gekennzeichnet, dass** das freie Ende der in dritter und/oder in vierter Gebrauchsposition befindlichen Werkstoffbahn (21) an karosserieseitigen Halteelementen (29b, 29c), die insbesondere an einem Boden (18) des Laderaumes, an einer Seitenwand (12) oder an einer Rücklehne (11) des Kraftfahrzeuges angeordnet sind, festgelegt ist.

14. Schutzvorrichtung nach Anspruch 12 oder 13, **dadurch gekennzeichnet, dass** die in dritter Gebrauchsposition befindliche Werkstoffbahn auf dem Boden (18) des Laderaumes aufliegt.

15. Schutzvorrichtung nach Anspruch 12 oder 13, **dadurch gekennzeichnet, dass** die in vierter Gebrauchsposition befindliche Werkstoffbahn Ladegut (32) überspannt und festlegt.

16. Schutzvorrichtung nach einem der vorangegangenen Ansprüche, **dadurch gekennzeichnet, dass** die Werkstoffbahn und/oder die Schutzvorrichtung mit dem Kraftfahrzeug zumindest mittelbar, insbesondere lösbar, fest verbunden ist.

17. Schutzvorrichtung nach einem der vorangegangenen Ansprüche, **dadurch gekennzeichnet, dass** die Kontur (25) der Werkstoffbahn (21) an die Kontur (24) der Zugangsöffnung (13) angepasst ist.

18. Schutzvorrichtung nach einem der vorangegangenen Ansprüche, **dadurch gekennzeichnet, dass** die Länge (I) der Werkstoffbahn (21) im wesentlichen der lichten Weite (w) der Zugangsöffnung (13) entspricht.

19. Schutzvorrichtung nach einem der vorangegangenen Ansprüche, **dadurch gekennzeichnet, dass** die Breite (h₂) der in Gebrauchsposition befindlichen Werkstoffbahn im wesentlichen der Höhe (h₁) des Laderaumes (10) entspricht.

20. Schutzvorrichtung nach einem der vorangegangenen Ansprüche, **dadurch gekennzeichnet, dass** die in Gebrauchslage befindliche Werkstoffbahn die Zugangsöffnung bis zu einer der Höhe (h₁) des Laderaumes entsprechenden Höhe (h₂) vollständig verschließt.

21. Schutzvorrichtung nach Anspruch 20, **dadurch gekennzeichnet, dass** die Höhe (h₂) wählbar ist und die Werkstoffbahn in der gewählten Höhe arretierbar ist.

## Claims

1. Protection device (20) for a cargo space (10) of a motor vehicle, especially an estate car, with which a rear-end access opening (13) which can be closed by a tailgate (26) is associated, the protection device (20) comprising an especially flexible web of material (21) which is displaceable between a resting position, in which it is arranged so as to be concealed, especially compressed, and leaves the access opening (13) substantially completely open, and a position of use, in which it at least partially closes the access opening (13) when the tailgate (26) is open and in which it prevents cargo (32) disposed in the cargo space (10) from passing through the access opening (13),
**characterised in that**
the web of material (21) can be transferred to a second position of use, in which it covers a loading edge (L) of the access opening (13), and the web of material (21) covers, in the second position of use, a rear-end bumper (23) of the motor vehicle.

2. Protection device according to claim 1, **characterised in that** the web of material (21) is associated with at least one operating element (27) for transferring the web of material (21) from the resting position to the position of use.

3. Protection device according to claim 2, **characterised in that**, when the web of
material (21) is in the resting position, the operating element (27) is disposed in the region of the edge (24) of the access opening (13).

4. Protection device according to any one of claims 1 to 3, **characterised in that**, when in the resting position, the web of material is accommodated in a built-in space (E) in the vehicle.

5. Protection device according to claim 4, **characterised in that** the built-in space (E) is disposed behind a boundary surface (35, 18, 12) of the cargo space (10), especially beneath a floor area (18) of the cargo space.

6. Protection device according to claim 5, **characterised in that** the built-in space (E) ends substantially flush with a boundary surface (35, 18, 12) of the cargo space (10), especially with the floor of the cargo space.

7. Protection device according to any one of the preceding claims, **characterised in that** the web of material (21) is of a flexible construction and is held on a winding shaft (28).

8. Protection device according to claim 7, **characterised in that** the winding shaft is associated with a motor, especially a spring motor.

9. Protection device according to claim 8, **characterised in that** a retraction force exerted on the web of material by the motor can be switched off and/or on, especially by means of a switch element.

10. Protection device according to claim 9, **characterised in that** the switch element is disposed in the region of the edge (24) of the access opening (13).

11. Protection device according to any one of the preceding claims, **characterised in that** the web of material (21) has, at its free end (33), fastening elements (31), preferably at axial end regions of a pull-out rod (22), which fastening elements (31) cooperate with retaining elements (29a, 29b, 29c) on the car body.

12. Protection device according to any one of the preceding claims, **characterised in that** the web of material can be transferred to a third and/or fourth position of use, in which its free end (33) is disposed inside the cargo space, at a distance from the access opening.

13. Protection device according to claim 12, **characterised in that**, when the web of material (21) is in the third and/or fourth position of use, the free end thereof is secured to retaining elements (29b, 29c) on the car body, which retaining elements (29b, 29c) are disposed especially on a floor (18) of the cargo space, on a side wall (12) or on a seat back (11) of the motor vehicle.

14. Protection device according to claim 12 or claim 13, **characterised in that**, when in the third position of use, the web of material rests on the floor (18) of the cargo space.

15. Protection device according to claim 12 or claim 13, **characterised in that**, when the web of material is in the fourth position of use, it extends over and secures the cargo (32).

16. Protection device according to any one of the preceding claims, **characterised in that** the web of material and/or the protection device is firmly connected to the vehicle at least indirectly, especially in a detachable manner.

17. Protection device according to any one of the preceding claims, **characterised in that** the contour (25) of the web of material (21) is adapted to the contour (24) of the access opening (13).

18. Protection device according to any one of the preceding claims, **characterised in that** the length (I) of the web of material (21) substantially corresponds to the inside width (w) of the access opening (13).

19. Protection device according to any one of the preceding claims, **characterised in that** the width (h₂) of the web of material when in a position of use substantially corresponds to the height (h₁) of the cargo space (10).

20. Protection device according to any one of the preceding claims, **characterised in that**, when in a position of use, the web of material completely closes the access opening to a height (h₂) corresponding to the height (h₁) of the cargo space.

21. Protection device according to claim 20, **characterised in that** the height (h₂) is selectable and the web of material is arrestable at the selected height.

## Revendications

1. Dispositif de protection (20) pour un espace de chargement (10) d'un véhicule automobile, en particulier d'un véhicule de type break, auquel est affectée, côté arrière, une ouverture d'accès (13) pouvant être fermée par une porte arrière (26), où le dispositif de protection (20) comprend une bande de matière (21), en particulier flexible, qui est disposée en pouvant se déplacer entre une position de repos, dans laquelle elle est cachée, en particulier comprimée, et dégage pratiquement complètement l'ouverture d'accès (13), et une position d'utilisation dans laquelle ladite bande de matière obture au moins partiellement l'ouverture d'accès (13) lorsque la porte arrière (26) est ouverte, et ledit dispositif de protection empêche, dans le chargement (32) disposé dans l'espace de chargement (10), un passage à travers l'ouverture d'accès (13),
**caractérisé**
**en ce que** la bande de matière (21) peut passer dans une deuxième position d'utilisation dans laquelle ladite bande de matière recouvre un bord de chargement (L) de l'ouverture d'accès (13), et
**en ce que** la bande de matière (21), dans la deuxième position d'utilisation, recouvre un pare-chocs (23), côté arrière, du véhicule automobile.

2. Dispositif de protection selon la revendication 1, **caractérisé en ce que** au moins un élément d'actionnement (27) est affecté à la bande de matière (21), pour que la bande de matière (21) passe de la position de repos, à la position d'utilisation.

3. Dispositif de protection selon la revendication 2, **caractérisé en ce que** l'élément d'actionnement (27), lorsque la bande de matière (21) est en position de repos, est disposé dans la zone du bord (24) de l'ouverture d'accès (13).

4. Dispositif de protection selon l'une quelconque des revendications 1 à 3, **caractérisé en ce que** la bande de matière en position de repos est logée dans un espace de montage (E), côté véhicule.

5. Dispositif de protection selon la revendication 4, **caractérisé en ce que** l'espace de montage (E) est disposé derrière une surface de limitation (35, 18, 12) de l'espace de chargement (10), en particulier au-dessous d'une surface de fond (18) de l'espace de chargement.

6. Dispositif de protection selon la revendication 5, **caractérisé en ce que** l'espace de montage (E) se termine pratiquement à fleur d'une surface de limitation (35, 18, 12) de l'espace de chargement (10), en particulier à fleur du fond de l'espace de chargement.

7. Dispositif de protection selon l'une quelconque des revendications précédentes, **caractérisé en ce que** la bande de matière (21) est conçue en étant flexible et maintenue sur un arbre d'enroulement (28).

8. Dispositif de protection selon la revendication 7, **caractérisé en ce qu'**un moteur, en particulier un moteur à ressort, est associé à l'arbre d'enroulement.

9. Dispositif de protection selon la revendication 8, **caractérisé en ce qu'**une force de rappel exercée par le moteur sur la bande de matière, en particulier au moyen d'un élément de commutation, peut être neutralisée et/ou mise en oeuvre.

10. Dispositif de protection selon la revendication 9, **caractérisé en ce que** l'élément de commutation est disposé dans la zone du bord (24) de l'ouverture d'accès (13).

11. Dispositif de protection selon l'une quelconque des revendications précédentes, **caractérisé en ce que** la bande de matière (21) présente, au niveau de son extrémité libre (33), des éléments de fixation (31), de préférence au niveau de zones d'extrémités axiales d'une baguette de déploiement (22), lesdits éléments de fixation fonctionnant en association avec des éléments de retenue (29a, 29b, 29c), côté carrosserie.

12. Dispositif de protection selon l'une quelconque des revendications précédentes, **caractérisé en ce que** la bande de matière peut passer dans une troisième et/ou une quatrième position d'utilisation dans laquelle son extrémité libre (33), à l'intérieur de l'espace de chargement, est disposée à distance de l'ouverture d'accès.

13. Dispositif de protection selon 1a revendication 12, **caractérisé en ce que** l'extrémité libre de la bande de matière (21) se trouvant dans la troisième et/ou dans la quatrième position d'utilisation est fixée sur des éléments de retenue (29b, 29c), côté carrosserie, qui sont disposés, en particulier, sur un fond (18) de l'espace de chargement, sur un panneau latéral (12) ou sur un dossier arrière (11) du véhicule automobile.

14. Dispositif de protection selon la revendication 12 ou 13, **caractérisé en ce que** la bande de matière se trouvant dans la troisième position d'utilisation est appliquée sur le fond (18) de l'espace de chargement.

15. Dispositif de protection selon la revendication 12 ou 13, **caractérisé en ce que** la bande de matière se trouvant dans la quatrième position d'utilisation recouvre et fixe le chargement (32).

16. Dispositif de protection selon l'une quelconque des revendications précédentes, **caractérisé en ce que** la bande de matière et/ou le dispositif de protection est solidement relié(e) au véhicule automobile, au moins de manière indirecte, en particulier de manière amovible.

17. Dispositif de protection selon l'une quelconque des revendications précédentes, **caractérisé en ce que** le contour (25) de la bande de matière (21) est adapté au contour (24) de l'ouverture d'accès (13).

18. Dispositif de protection selon l'une quelconque des revendications précédentes, **caractérisé en ce que** la longueur (1) de la bande de matière (21) correspond pratiquement à la largeur intérieure (w) de l'ouverture d'accès (13).

19. Dispositif de protection selon l'une quelconque des revendications précédentes, **caractérisé en ce que** la largeur (h₂) de la bande de matière se trouvant en position d'utilisation correspond pratiquement à la hauteur (h₁) de l'espace de chargement (10).

20. Dispositif de protection selon l'une quelconque des revendications précédentes, **caractérisé en ce que** la bande de matière se trouvant en position d'utilisation obture complètement l'ouverture d'accès jusqu'à une hauteur (h₂) correspondant à la hauteur (h₁) de l'espace de chargement.

21. Dispositif de protection selon la revendication 20, **caractérisé en ce que** la hauteur (h₂) peut être choisie, et la bande de matière peut être stoppée à la hauteur choisie.
